# EUROPÄISCHE PATENTSCHRIFT

(11) **EP 3 197 729 B1**
(45) Veröffentlichungstag und Bekanntmachung des Hinweises auf die Patenterteilung: **21.10.2020**
(21) Anmeldenummer: 15766140.6
(22) Anmeldetag: 17.09.2015
(51) Int. Cl.: B60R 22/48, A63G 7/00

(54) **VORRICHTUNG ZUR RÜCKHALTUNG EINES FAHRGASTES IN EINER HALTERUNG EINES FAHRGESCHÄFTES**
MECHANISM FOR RESTRAINING A PASSENGER IN A RESTRAINT SYSTEM OF AN AMUSEMENT RIDE
DISPOSITIF DE RETENUE D'UN OCCUPANT DANS UN RÉCEPTACLE D'UN MANÈGE

(30) Priorität: 24.09.2014 DE 102014113869
(43) Veröffentlichungstag der Anmeldung: 02.08.2017
(73) Patentinhaber: Mack Rides GmbH & Co. KG, 79183 Waldkirch (DE)
(72) Erfinder: BURGER, Günter, 79183 Waldkirch (DE); SORNIK, Frank, 79183 Waldkirch (DE); HAUER, Roman, 79183 Waldkirch (DE); GORDT, Dennis, 79312 Emmendingen (DE)
(74) Vertreter: Westphal, Mussgnug & Partner Patentanwälte mbB
(86) Internationale Anmeldenummer: PCT/EP2015/071306
(87) Internationale Veröffentlichungsnummer: WO 2016/046050

(56) Entgegenhaltungen:
- EP-A1- 1 020 212
- EP-A1- 1 618 933
- EP-A2- 1 394 003
- WO-A1-01/74626
- WO-A1-2014/194969

## Beschreibung

Die Erfindung betrifft eine Vorrichtung zur Rückhaltung von einem in einer Halterung eines Fahrgeschäftes gehaltenen Fahrgast gemäß dem Oberbegriff des Patentanspruchs 1 und ein Verfahren zur Rückhaltung von einem in einer Halterung eines Fahrgeschäftes gehaltenen Fahrgast gemäß dem Oberbegriff des Patentanspruchs 11. Rückhaltesysteme an Fahrgeschäften sind beispielsweise aus EP 1020212 B1 bekannt, die ein Rückhaltesystem für Vergnügungsfahrzeuge offenbart, durch das Fahrgäste an ihrem Unterkörper gehalten werden. Diese Art der Halterung wird von den Fahrgästen im Allgemeinen bevorzugt, da sie im Gegensatz zu einzwängenden Schulterbügeln eine maximale Bewegungsfreiheit erlauben und somit ein intensives Fahrgefühl gegeben ist. Das Dokument WO01/74626A1 offenbart Rückhaltesysteme an Fahrgeschäften gemäß dem Stand der Technik.

Das sichere Halten der Fahrgäste an den Oberschenkeln ist von verschiedenen ergonomischen Maßnahmen abhängig, wie beispielsweise das vollflächige Aufliegen der Schenkel in einer festen Halterung und/oder an einer beweglichen Halterung einer Fahrgastaufnahme. Hier und im Folgenden wird unter fester Halterung eine Halterung verstanden, die in Bezug zu der Fahrgastaufnahme unbeweglich ist und die zur Aufnahme eines Körpers und /oder Körperregion des Fahrgastes dient, z. B. eine Sitzschale, Rückenschale, Frontschale, Liegeschale etc. Unter beweglicher Halterung wird eine Halterung verstanden, die in Bezug zu der Fahrgastaufnahme beweglich ist und die zur Fixierung und Rückhaltung des Körpers und/oder von Körperregionen des Fahrgastes in der festen Halterung dient, z. B. Schoßbügel, Schulterbügel, Bauchbügel, Rückenbügel, Beinbügel etc. Auf Grund der unterschiedlichen Körperabmessungen der Fahrgäste ergibt sich eine große Bandbreite an Personen, die in der ergonomischen Ausführung des Rückhaltesystems zu berücksichtigen sind. Dies erfordert beispielsweise auch eine individuell einstellbare Lage der beweglichen Halterung zum formschlüssigen Einschluss des Fahrgastes in dem Rückhaltesystem.

Bei herkömmlichen Rückhaltesystemen, wie beispielsweise in EP 1020212 B1 beschrieben, nimmt der Fahrgast die korrekte Sitzposition und das körpernahe Anliegen der beweglichen Halterung selbst vor, wobei die korrekte Sitzposition und das körpernahe Anliegen vom Bedienpersonal des Fahrgeschäftes überprüft werden. Aus verschiedenen Gründen, wie z.B. Fehlverhalten, dick auftragende Kleidung oder mitgeführten Gegenständen, können die korrekte Sitzposition und das körpernahe Anliegen der beweglichen Halterung eingeschränkt sein.

Es sind aber auch Rückhaltesysteme denkbar, bei denen eine Maximalposition der beweglichen Halterung mittels Sensoren erfasst wird, welche sich auf die korpulenteste Person bezieht, welche gerade noch mitfahren darf. Diese Art des Rückhaltesystems ist jedoch unzureichend, da systembedingt beispielsweise Startfreigabe für ein Kind erteilt werden würde, sobald sich die bewegliche Halterung knapp unterhalb der Maximalstellung befindet. In diesem Fall wäre zwischen dem Oberschenkel des Kindes und der beweglichen Halterung ein derart großer Spalt, dass das Kind leicht aussteigen könnte, was aus Sicherheitsgründen natürlich nicht geschehen darf.

Sensoreinrichtungen an Halterungen von Fahrgästen sind aus der Automobilindustrie bekannt. Z.B. offenbart DE 199 83 956 B4 einen Insassensensor, der die Präsenz eines Insassen auf einem Sitzunterteil erfasst zur Steuerung eines Airbagrückhaltesystems.

Ein Rückhaltebügel zur Sicherung einer Person in Fahrzeugen, insbesondere für Vergnügungsbahnen, ist aus der DE 100 16 213 C1 bekannt. Allerdings erkennt der Sensor der DE 100 16 213 C1 keinen mitgeführten Gegenstand zwischen einem Schulterbügel und Fahrgast und gewährleistet damit keinen Formschluss zwischen Rückhaltebügel und Fahrgast.

Die Aufgabe der Erfindung besteht darin, ein Rückhaltesystem bereitzustellen, das einen erforderlichen Formschluss in einem Fahrgeschäft zwischen Rückhaltesystem und Fahrgast gewährleistet und somit die Sicherheit von Rückhaltesystemen in Fahrgeschäften erhöht. Unter Formschluss wird hier und im Folgenden das An- bzw. Aufliegen der beweglichen Halterung an dem Fahrgast verstanden.

Die Aufgabe der Erfindung wird gelöst durch eine Vorrichtung mit den Merkmalen des Patentanspruchs 1 und durch ein Verfahren mit den Merkmalen des Patentanspruchs 11. Vorteilhafte Ausgestaltungen und Weiterbildungen der Erfindung sind in den Unteransprüchen angegeben.

Die erfindungsgemäße Vorrichtung zur Rückhaltung von einem in einer Halterung eines Fahrgeschäftes gehaltenen Fahrgast weist wenigstens eine Sensoreinrichtung auf, die ihrerseits Mittel aufweist, mit denen ein Formschluss zwischen einem Fahrgast und der Vorrichtung überprüft werden kann.

Mit der erfindungsgemäßen Sensoreinrichtung wird ein Formschluss zwischen dem Fahrgast und der Halterung eines Fahrgeschäftes, wie z. B. Achterbahnen in Vergnügungsparks, überprüft, wobei die Einstellung des Formschlusses nicht auf den Oberkörper des Fahrgastes und der Halterung beschränkt ist, wie es in der Automobilindustrie üblich ist, sondern beispielsweise auch zwischen den Oberschenkeln des Fahrgastes und der Halterung zu gewährleisten ist.

Eine sensorielle Überprüfung des Formschlusses zwischen dem Fahrgast und der Halterung eines Fahrgeschäftes erhöht die Sicherheit des Betriebs von Fahrgeschäften und gewährleistet eine Startfreigabe des Fahrgeschäftes ausschließlich bei korrektem, körpernahem Anliegen der Halterung. Die erfindungsgemäße Vorrichtung unterstützt das Bedienpersonal des Fahrgeschäftes bei der Erkennung von beispielsweise falscher Sitzposition und/oder nicht körpernahen Anliegens der beweglichen Halterung durch den Formschluss beeinträchtigende Gegenstände.

Die Vorrichtung zur Rückhaltung eines Fahrgastes in einem Fahrgeschäft ist derart ausgestaltet, dass die Mittel der Sensoreinrichtung Körper und/oder Körperpositionen von Fahrgästen erfassen können.

Das Erfassen des Körpers und/oder von Körperpositionen von Fahrgästen stellt sicher, dass eine Starfreigabe des Fahrgeschäftes nur bei korrekter Sitzposition des Fahrgastes erfolgt. Unterschiedliche Körperabmessungen der Fahrgäste können somit einfach erfasst werden. Des Weiteren kann somit erfasst werden, ob sich ein Fahrgast durch Überstrecken des Körpers beim Beladen im Rücken- oder Gesäßbereich mehr Freiheit verschaffen möchte zur Intensivierung des Fahrerlebnisses, wodurch der Formschluss zwischen dem Fahrgast und der Halterung ohne sensorielle Erfassung des Körpers und/oder von Körperpositionen nicht mehr sicher zu gewährleisten wäre. In diesem Fall erkennt allerdings die Vorrichtung, dass ein Formschluss nicht mehr gewährleistet ist, und eine Startfreigabe wird nicht eingeleitet.

Gemäß einer Weiterbildung der Erfindung sind die Mittel der Sensoreinrichtung für eine Vergleichsmessung einzelner Körperteile und/oder Körperregionen von Fahrgästen mit einer vorgegebenen Halterungsposition ausgestaltet.

Eine derartige Vergleichsmessung einzelner Körperteile und/oder Körperregionen mit einer vorgegebenen Halterungsposition hat den Vorteil, dass auch körperfremde Gegenstände, wie z. B. Prothesen, erkannt werden können.

Es erweist sich als besonders vorteilhaft, wenn die Sensoreinrichtung einen optischen Scanner aufweist, der Vergleichsmessungen einzelner Körperteile und/oder Körperregionen von Fahrgästen mit einer vorgegebenen Halterungsposition durchführt. Hierbei kann der Scanner den Fahrgast visuell erfassen und das so erfasste Bild mit der vorgegebenen Halterungsposition vergleichen.

Vorteilhafterweise weist die Sensoreinrichtung einen Temperatursensor und/oder einen Oberflächenmesssensor und/oder einer Drucksensor und/oder einen Sensor, der ein verdrängbares oder komprimierbares Medium erfasst und/oder einen Ultraschallsensor und/oder einen Infrarotsensor auf.

Beispielsweise erkennen Temperatursensoren, die die Körpertemperatur von Fahrgästen erfassen, mitgeführte Gegenstände oder dick auftragende Kleidung. Befinden sich derartige Gegenstände zwischen Körper und dem Temperatursensor, würde eine voreingestellte Mindesttemperatur nicht erreicht werden und das Startfreigabesignal wäre negativ.

Gemäß einer bevorzugten Ausgestaltung der Erfindung ist eine bewegliche Halterung vorgesehen, wobei die Mittel der Sensoreinrichtung zur Überwachung eines am Körper des Fahrgastes nahes Anliegen der beweglichen Halterung ausgestaltet sind. Mit der sensoriellen Überwachung des körpernahen Anliegens der beweglichen Halterung kann ein Fehlverhalten des Fahrgastes, z.B. Überstrecken des Körpers beim Beladen im Rücken - und/oder Gesäßbereich, einfach erkannt werden. Die sensorielle Überwachung des körpernahen Anliegens der beweglichen Halterung eignet sich daher besonders gut das Bedienpersonal des Fahrgeschäftes zu unterstützen und hilft somit, menschliche Fehler zu reduzieren und die Sicherheit für die Fahrgäste zu erhöhen.

Erfindungsgemäß ist die Vorrichtung zur Erteilung einer Startfreigabe für das Fahrgeschäft ausgestaltet.

Hierbei erfolgt die Startfreigabe erst nach positivem Rückmeldesignal der Mittel der Sensoreinrichtung. Somit wird die Sicherheit erhöht, dass der erforderliche Formschluss zwischen Rückhaltesystem und Fahrgast gewährleistet ist.

Die Halterung der erfindungsgemäßen Vorrichtung weist insbesondere eine Sitzschale, eine bewegliche Halterung und eine Rückenschale auf.

Eine Halterung mit einer Sitzschale, einer beweglichen Halterung und einer Rückenschale stellt eine besonders gute Ergonomie in der Halterung von Fahrgeschäften dar. Vorteilhafterweise ist die Sensoreinrichtung in der Halterung der Sitzschale, der beweglichen Halterung oder der Rückenschale angebracht. Sensoren, die in der Sitzschale und der Rückenschale angebracht sind, gewähren eine korrekte Erfassung der Sitzposition des Fahrgastes in der Halterung des Fahrgeschäftes. Sensoren in der beweglichen Halterung überwachen das körpernahe Anliegen der beweglichen Halterung.

Um möglichst viele Informationen über die Ausmaße des Körpers des Fahrgastes zu erfassen, weist die Vorrichtung vorzugsweise mehrere Sensoreinrichtungen auf, wobei die Sensoreinrichtungen in der Halterung, in der beweglichen Halterung oder in der beweglichen Halterung und der Sitzschale und/oder der Rückenschale angebracht sind.

Dabei kann z.B. eine Sensoreinrichtung Temperatursensoren und eine andere Sensoreinrichtung Drucksensoren aufweisen, sodass neben der Körpertemperatur und / oder der temperaturabhängigen Distanzmessung von Fahrgästen zusätzlich Anpresskräfte von Fahrgästen in der Halterung des Fahrgeschäftes erfasst werden können. Ein Auslesen der Körpertemperatur und /oder des Abstands aufgrund der Temperaturmessung und der Anpresskräfte von Fahrgästen trägt zur besseren Erfassung des Körpers bzw. von Körperteilen der Fahrgäste und der Unterscheidung zu Gegenständen bei.

In einer Weiterbildung der Erfindung ist die Sensoreinrichtung teilweise oder komplett außerhalb der Halterung des Fahrgeschäftes angebracht. Eine außerhalb der Halterung des Fahrgeschäftes angebrachte Sensoreinrichtung könnte beispielsweise im Bahnhof des Fahrgeschäftes angebracht sein und den Formschluss zwischen dem Fahrgast und der Halterung des Fahrgeschäftes auch während der Durchfahrt des Fahrgeschäftes durch den Bahnhof erfassen.

Die Rückhaltung von einem in einer Halterung eines Fahrgeschäftes gehaltenen Fahrgastes wird erfindungsgemäß dadurch eingestellt, dass eine Messeinheit als Eingangssignal die von den Mitteln der Sensoreinrichtung erfassten Ausmaße des Fahrgastes erfasst. Die Messeinheit leitet die Eingangssignale an eine Einstelleinrichtung weiter. Die Einstelleinrichtung stellt die Halterung an die Ausmaße des Fahrgastes vor Start des Fahrgeschäftes ein.

Ein derartiges Verfahren unterstützt das Bedienpersonal des Fahrgeschäftes bei der Erkennung von Fehlverhalten, wie beispielsweise falsche Sitzposition, auftragende Kleidung oder Gegenstände, welche den Formschluss beeinträchtigen. Die Startfreigabe des Fahrgeschäftes, die bei bekannten Rückhaltesystemen bisher innerhalb des Schließstellungsbereichs der beweglichen Halterung auch bei nicht korrekter Schließstellung der beweglichen Halterung erfolgen konnte, ist nun erst möglich, wenn die bewegliche Halterung tatsächlich körpernah anliegt.

In einer Weiterbildung der Erfindung werden die Ausmaße des Fahrgastes bei der Durchfahrt des Fahrgeschäftes durch den Startbereich des Fahrgeschäftes erfasst.

Diese Weiterentwicklung des erfindungsgemäßen Verfahrens erlaubt es, den korrekten Formschluss zwischen Rückhaltesystem und Fahrgästen auch während des Betriebs des Fahrgeschäftes zu ermitteln.

Vorzugsweise weist die Einstelleinrichtung des erfindungsgemäßen Verfahrens einen Stellmotor auf. Mit einem Stellmotor kann beispielsweise die bewegliche Halterung besonders einfach eingestellt werden.

Die Erfindung wird anhand der Ausführungsbeispiele der nachfolgenden Figuren ausführlich erläutert.

Es zeigen:
- Fig. 1: Vorderansicht eines Ausführungsbeispiels einer Vorrichtung zur Rückhaltung von einem in einer Halterung eines Fahrgeschäftes gehaltenen Fahrgast,
- Fig. 2: Detailansicht einer Halterung mit einer Vorrichtung zur Rückhaltung von einem Fahrgast gemäß Fig. 1.
- Fig.3: Blockdiagramm zur Veranschaulichung des erfindungsgemäßen Verfahrens zu Fig. 1

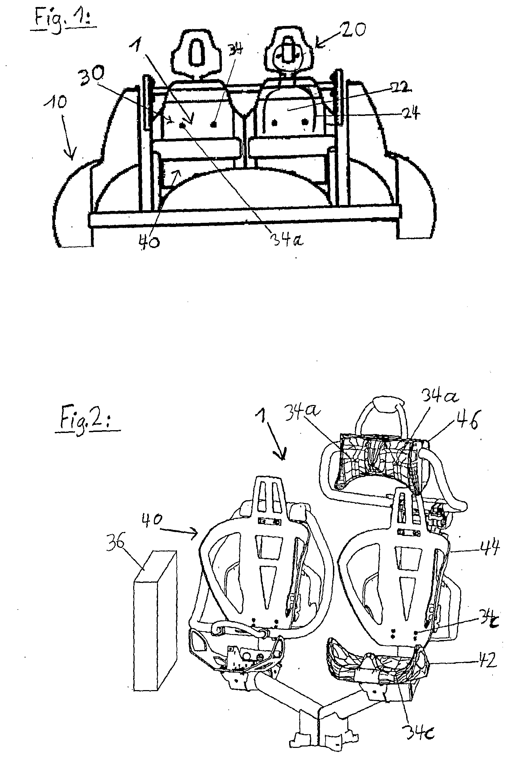

Figur 1 zeigt eine Vorderansicht eines Ausführungsbeispiels einer Vorrichtung 1 zur Rückhaltung von einem in einer Halterung 40 eines Fahrgeschäftes 10 gehaltenen Fahrgast 20.

Figur 2 zeigt eine Detailansicht einer Halterung 40 mit einer Vorrichtung 1 gemäß Figur 1.

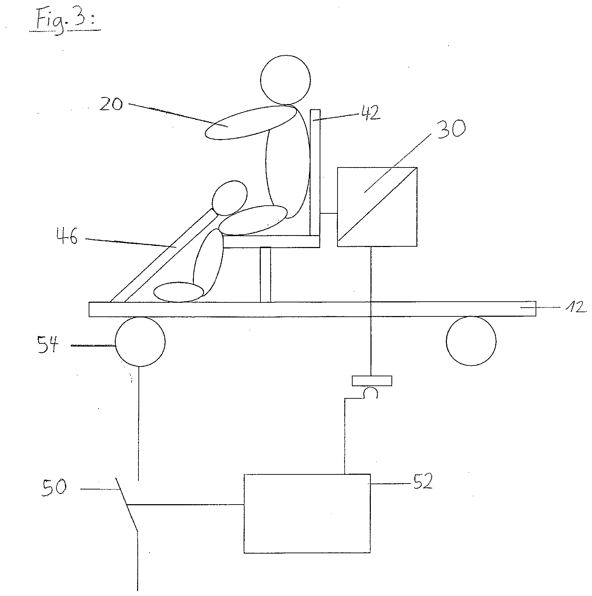

Figur 3 zeigt anhand eines Blockdiagrams schematisch das erfindungsgemäße Verfahren zum Einstellen der Vorrichtung gemäß Figur 1.

Um unnötige Wiederholungen zu vermeiden, werden im Folgenden die Figuren 1 bis 3 gemeinsam behandelt.

Das Ausführungsbeispiel zeigt ein Fahrgeschäft 10 mit einer Vorrichtung 1 zur Rückhaltung eines Fahrgastes 20. Der Fahrgast 20 wird in einer Halterung 40 gehalten, wobei die Halterung 40 in einer Fahrgastaufnahme 12, z.B. einem Fahrzeug, einer Gondel, einer Kabine, aufgenommen ist. Das Fahrgeschäft kann beispielsweise ein schienengebundenes Fahrgeschäft in einem Vergnügungspark, insbesondere eine Achterbahn, sein.

Moderne Rückhaltesysteme an Fahrgeschäften 10 sind so konzipiert, dass sie mit möglichst wenig Berührungspunkten zum Fahrgast 20 diesen sicher halten. Die Halterung 40 des Ausführungsbeispiels in Figur 1 hält den Fahrgast 20 z. B. an dessen hier nicht gezeigten Oberschenkeln.

Die Vorrichtung 1 weist eine Sensoreinrichtung 30 auf, die über Mittel 34 verfügt, mit welchen ein Formschluss zwischen dem Fahrgast 20 und der Vorrichtung 1 überwacht werden kann. In dem hier gezeigten Ausführungsbeispiel weist die Sensoreinheit 30 einen Temperatursensor 34a auf, der die Körpertemperatur von Fahrgästen 20 erfasst. Allerdings beschränkt sich die Sensoreinrichtung 30 nicht nur auf Temperatursensoren 34a. Es können auch hier nicht gezeigte Oberflächensensoren 34b, Drucksensoren 34c, Sensoren 34d, die ein verdrängbares oder komprimierbares Medium erfassen, oder kapazitive Sensoren 34e oder Ultraschallsensoren 34f oder Infrarotsensoren 34g oder sonstige Sensoren zur Erfassung der Ausmaße eines Fahrgastes 20 eingesetzt werden.

Mit diesen Mitteln 34 der Sensoreinrichtung 30 können Körper 22 und/oder Körperpositionen 24, z. B. eine sitzende Körperposition 24 des Fahrgastes 20, wie im Ausführungsbeispiel der Figur 1 gezeigt, oder Körperregionen 26 von Fahrgästen 20 erfasst werden.

Auf Grund der unterschiedlichen Körperabmessungen der Fahrgäste 20 ergibt sich eine große Bandbreite an Personen, die in der ergonomischen Ausführung der Halterung 40 zu berücksichtigen sind. Dies erfordert beispielsweise auch die individuell einstellbare Lage der beweglichen Halterung 46, in die die Mittel 34 der Sensoreinrichtung 30 angebracht werden können. Die Mittel 34 der Sensoreinrichtung 30, angebracht in der beweglichen Halterung 46, überwachen den Formschluss zwischen dem Fahrgast 20 und der beweglichen Halterung 46 bzw. der Halterung 40. Der Körper 22 des Fahrgastes 20 wird in der Halterung 40 so eingezwängt, dass der Fahrgast 20 formschlüssig in der Halterung 40 eingeschlossen ist. Er kann also weder durch auftretende Beschleunigungskräfte noch durch Eigenantrieb aus der Halterung 40 entweichen.

Im Ausführungsbeispiel ist ein Scanner 36 gezeigt, der getrennt von der Halterung 40 angeordnet ist. Der Scanner 36 führt eine Vergleichsmessung einzelner Körperteile und/oder Körperregionen von Fahrgästen 20 mit einer vorgegebenen Halterungsposition durch. Zweckmäßigerweise erfasst der Scanner 36 zur Vergleichsmessung ein optisches Abbild des Fahrgastes 20, welches dann einfach mit einer vorgegebenen Halterungsposition verglichen werden kann. Durch eine derartige optische Vergleichsmessung können körperfremde Gegenstände von Fahrgästen 20, beispielsweise Rucksäcke, Taschen usw., einfach und zuverlässig erkannt werden.

Die gezeigte Halterung 40 weist eine Sitzschale 42, eine Rückenschale 44 und eine bewegliche Halterung 46 auf. Die Sensoreinrichtung im Ausführungsbeispiel der Figur 2 umfasst Temperatursensoren 34a, angeordnet in der beweglichen Halterung 46 sowie Drucksensoren 34c, angeordnet in der Rückenschale 44 und der Sitzschale 42. Natürlich sind auch Halterungen 40 denkbar mit sonstigen Sensoren. Der Einsatz von Sensoren, die verschiedene Messgrößen quantitativ erfassen, wie im Ausführungsbeispiel beispielsweise Temperatursensoren 34a, welche die Körpertemperatur von Fahrgästen 20 erfassen und Drucksensoren 34c, welche Anpresskräfte von Fahrgästen 20 in der Rückenschale 44 und der Sitzschale 42 erfassen, gewährt eine sichere Erfassung des Körpers 22 und der Körperpositionen 24 eines Fahrgastes 20.

Die Mittel 34 der Sensoreinrichtung 30 können in der Halterung 40 oder außerhalb des Fahrgeschäftes 10, beispielsweise im Startbereich, angebracht sein und bei der Durchfahrt des Fahrgeschäftes 10 durch den Startbereich oder vor der Abfahrt des Fahrgeschäftes 10 den Formschluss zwischen Fahrgast 20 und der Halterung 40 überwachen.

In dem gezeigten Verfahren zur Rückhaltung von einem in einer Halterung 40 eines Fahrgeschäftes 10 gehaltenen Fahrgast 20 durch eine Vorrichtung 1 wird eine Einstelleinrichtung 50 eingesetzt. Eine Messeinheit 52 empfängt als Eingangssignal die von den Mitteln 34 der Sensoreinrichtung 30 erfassten Ausmaße des Fahrgastes 20. Die Messeinheit 52 leitet die Eingangssignale weiter an die Einstelleinrichtung 50. Die Einstelleinrichtung 50 kann die Halterung 40 des Fahrgeschäftes vor Start und/oder während der Durchfahrt des Fahrgeschäftes 10 durch den Startbereich einstellen. Im einfachsten Fall weist die Einstelleinrichtung einen Stellmotor 54 auf, der ein körpernahes Anliegen der beweglichen Halterung 46 am Körper 22 des Fahrgastes 20 einstellt.

Die sensorielle Überwachung der Körperposition 24 und des körpernahen Anliegens der beweglichen Halterung 46 durch Sensoreinrichtungen 30 erhöht die Sicherheit, sodass der Formschluss zwischen Fahrgast 20 und der Halterung 40 gewährleistet ist.

Die Vorrichtung 1 zur Rückhaltung von Fahrgästen 20 unterstützt das Bedienpersonal von Fahrgeschäften 10 bei der Erkennung von Fehlverhalten, wie beispielsweise falsche Sitzposition, auftragende Kleidung oder Gegenständen, welche den Formschluss beeinträchtigen. Die Startfreigabe des Fahrgeschäftes 10, welche bisher innerhalb des Schließstellungsbereichs der beweglichen Halterung 46 auch bei nicht korrekter Schließstellung der beweglichen Halterung 46 erfolgen konnte, ist nun erst möglich, wenn die bewegliche Halterung 46 tatsächlich körpernah am Körper 22 des Fahrgastes 20 anliegt.

Als Assistenzsystem zur Unterstützung des Bedienpersonals hilft die in dem Ausführungsbeispiel gezeigte Vorrichtung 1, menschliche Fehler zu reduzieren und somit die Sicherheit für die Fahrgäste 20 zu erhöhen.

### Bezugszeichenliste

- 1: Vorrichtung zur Rückhaltung

- 10: Fahrgeschäft
- 12: Fahrgastaufnahme

- 20: Fahrgast
- 22: Körper
- 24: Körperposition
- 26: Körperregion

- 30: Sensoreinrichtung
- 34: Mittel
- 34a: Temperatursensor
- 34b: Oberflächensensor
- 34c: Drucksensor
- 34d: Sensor, der ein verdrängbares oder komprimierbares Medium erfasst
- 34e: Kapazitiver Sensor
- 34f: Ultraschallsensor
- 34g: Infrarotsensor
- 36: Scanner

- 40: Halterung
- 42: feste Halterung

- 46: bewegliche Halterung -

- 50: Einstelleinrichtung
- 52: Messeinheit
- 54: Stellmotor

## Patentansprüche

1. Vorrichtung (1) zur Rückhaltung von einem in einer Halterung (40) eines Fahrgeschäftes (10) gehaltenen Fahrgastes (20) mit wenigstens einer Sensoreinrichtung (30),
wobei die Halterung (40) eine feste Halterung (42) und eine bewegliche Halterung (46) aufweist.
wobei die Sensoreinrichtung (30) Mittel (34) aufweist zur Erkennung und Überwachung einer Körperposition (24) des Fahrgastes (20) in Relation zur festen Halterung (42), wobei die Sensoreinrichtung (30) Mittel (34) aufweist zur Erkennung und Überwachung mindestens eines partiellen Formschlusses zwischen dem Fahrgast (20) und der Halterung (40), und
wobei die Vorrichtung (1) zur Erteilung einer Startfreigabe für das Fahrgeschäft (10)ausgestaltet ist.

2. Vorrichtung (1) nach Anspruch 1,
**dadurch gekennzeichnet, dass**
die Sensoreinrichtung (30) Mittel (34) aufweist zur Erfassung eines Körpers (22) und/oder von Körperregionen (26) und/oder von Körperpositionen (24) von Fahrgästen (20).

3. Vorrichtung (1) nach Anspruch 1 oder 2,
**dadurch gekennzeichnet, dass**
die Sensoreinrichtung (30) Mittel (34) aufweist für eine Vergleichsmessung von Körper (22) und/oder Körperregionen (26) von Fahrgästen (20) mit einer vorgegebenen Körperposition (24).

4. Vorrichtung (1) nach Anspruch nach einem der vorausgegangenen Ansprüche,
**dadurch gekennzeichnet, dass**
die Sensoreinrichtung (30) einen Scanner (36) aufweist.

5. Vorrichtung (1) nach einem der vorausgegangenen Ansprüche,
**dadurch gekennzeichnet, dass**
die Sensoreinrichtung (30) einen Temperatursensor (34a), und/oder einen Oberflächenmesssensor (34b), und/oder einen Drucksensor (34c)und/oder einen Sensor (34d), der ein verdrängbares oder komprimierbares Medium erfasst, und/oder einen kapazitiven Sensor (34e),und/oder einen Ultraschallsensor (34f)und/oder einen Infrarotsensor (34g) aufweist.

6. Vorrichtung (1) nach einem der vorangegangenen Ansprüche,
**dadurch gekennzeichnet, dass**
die Sensoreinrichtung (30) Mittel (34) aufweist zur Erkennung und Überwachung eines nahen Anliegens der beweglichen Halterung (46) am Körper (22) des Fahrgastes (20).

7. Vorrichtung (1) nach einem der vorangegangenen Ansprüche,
**dadurch gekennzeichnet, dass**
die Vorrichtung (1) zur Erteilung einer Startfreigabe für das Fahrgeschäft (10)ausgestaltet ist.

8. Vorrichtung (1) nach Anspruch 7,
**dadurch gekennzeichnet, dass**
die Mittel (34) der Sensoreinrichtung (30) in der festen Halterung (42) und/oder der beweglichen Halterung (44) angebracht sind.

9. Vorrichtung (1) nach einem der vorangegangenen Ansprüche,
**dadurch gekennzeichnet, dass**
die Vorrichtung (1) mehrere Sensoreinrichtungen (30) aufweist, wobei die Sensoreinrichtungen (30) in der Halterung (40), in der beweglichen Halterung (46) oder in der beweglichen Halterung (46) und der Sitzschale (42) und/oder der Rückenschale (44) angebracht sind.

10. Vorrichtung (1) nach einem der vorangegangenen Ansprüche,
**dadurch gekennzeichnet, dass**
die Sensoreinrichtung (30) teilweise oder komplett außerhalb der Halterung (40) des Fahrgeschäftes (10) angebracht ist.

11. Verfahren zur Rückhaltung von einem in einer Halterung (40) eines Fahrgeschäftes (10) gehaltenen Fahrgastes (20) durch eine der Vorrichtungen (1) nach einem der vorangegangenen Ansprüche mit einer Einstelleinrichtung (50),
**dadurch gekennzeichnet, dass**
eine Messeinheit (52) unter Verwendung wenigstens einer der Sensoreinrichtungen (30) die Ausmaße des Fahrgastes (20) erfasst, an die Einstelleinrichtung (50) weiterleitet und die Einstelleinrichtung (50) vor Start des Fahrgeschäftes (10) die Halterung (40) an die Ausmaße des Fahrgastes (20) einstellt, und eine Startfreigabe erst nach positivem Rückmeldesignal der Mittel (34) der Sensoreinrichtung (34) erfolgt, wenn der erforderliche Formschluss zwischen Rückhaltesystem und Fahrgast gewährleistet ist.

12. Verfahren nach Anspruch 11,
**dadurch gekennzeichnet, dass**
die Ausmaße des Fahrgastes (20) bei der Durchfahrt des Fahrgeschäftes (10) durch den Startbereich des Fahrgeschäftes (10) erfasst werden.

13. Verfahren nach Anspruch 11,
**dadurch gekennzeichnet, dass**
ein Start für das Fahrgeschäft (10) nach Einstellung der Halterung (40) an die Ausmaße des Fahrgastes (20) freigegeben wird.

14. Vorrichtung (1) nach einem der Ansprüche 1 bis 10 mit einer Einstelleinrichtung (50),
**dadurch gekennzeichnet, dass**
die Einstelleinrichtung (50) einen Stellmotor (54) aufweist.

## Claims

1. Apparatus (1) for restraining a passenger (20) held in a restraint (40) of an amusement ride (10) having at least one sensor arrangement (30), wherein the restraint (40) comprises a fixed restraint (42) and a movable restraint (46),
wherein the sensor arrangement (30) comprises means (34) for recognizing and monitoring the body position (24) of the passenger (20) in relation to the fixed restraint (42),
wherein the sensor arrangement (30) comprises means (34) for recognizing and monitoring at least one partial form fit between the guest (20) and the restraint (40), and
wherein the apparatus (1) is configured to grant clearance for the amusement ride (10) to start.

2. Apparatus (1) in accordance with claim 1,
**characterized in that**
the sensor arrangement (30) comprises means (34) for recognizing a body (22) and/or body regions (26) and/or body positions (24) of passengers (20).

3. Apparatus (1) in accordance with claim 1 or 2,
**characterized in that**
the sensor arrangement (30) comprises means (34) for a comparative measurement of the body (22) and/or body regions (26) of passengers (20) in relation to a specified body position (24).

4. Apparatus (1) in accordance with any of the preceding claims,
**characterized in that**
the sensor arrangement (30) comprises a scanner (36).

5. Apparatus (1) in accordance with any of the preceding claims,
**characterized in that**
the sensor arrangement (30) comprises a temperature sensor (34a), and/or a surface measurement sensor (34b), and/or a pressure sensor (34c) and/or a sensor (34d) that detects a displaceable or compressible medium, and/or a capacitive sensor (34e), and/or an ultrasonic sensor (34f), and/or an infrared sensor (34g).

6. Apparatus (1) in accordance with any of the preceding claims,
**characterized in that**
the sensor arrangement (30) comprises means (34) for recognizing and monitoring a close placement of the moveable restraint (46) on the body (22) of the passenger (20).

7. Apparatus (1) in accordance with any of the preceding claims,
**characterized in that**
the apparatus (1) is configured to grant clearance for the amusement ride (10) to start.

8. Apparatus (1) in accordance with claim 7,
**characterized in that**
the means (34) of the sensor arrangement (30) are disposed in the fixed restraint (42) and/or in the moveable restraint (44).

9. Apparatus (1) in accordance with any of the preceding claims,
**characterized in that**
the apparatus (1) comprises numerous sensor arrangements (30), wherein the sensor arrangements (30) are disposed in the restraint (40), in the moveable restraint (46) or in the moveable restraint (46) and the seat shell (42) and/or the back shell (44).

10. Apparatus (1) in accordance with any of the preceding claims,
**characterized in that**
the sensor arrangement (30) is partially or entirely disposed outside of the restraint (40) of the amusement ride (10).

11. Method for restraining a passenger (20) held in a restraint (40) of an amusement ride (10) by means of any of the devices (1) in accordance with any of the preceding claims, having an adjustment device (50),
**characterized in that**
a measurement unit (52), employing one of the sensor arrangements (30), determines the dimensions of the passenger (10), transmits these to the adjustment device (50), and the adjustment device (50) adjusts the restraint (40) to the dimensions of the passenger (20) before the amusement ride (10) is started, and **in that** clearance for starting is not granted until a positive confirmation signal comes from the means (34) of the sensor arrangement (34) that the required tight fit between the retention system and the passenger is ensured.

12. Method in accordance with claim 11,
**characterized in that**
the dimensions of the passenger (20) are detected when the amusement ride (10) drives through the starting area of the amusement ride (10).

13. Method in accordance with claim 11,
**characterized in that**
clearance is granted for the amusement ride (10) to start after the restraint (40) has been adjusted to the dimensions of the passenger (20).

14. Apparatus (1) in accordance with any of claims 1 to 10, having an adjustment device (50),
**characterized in that**
the adjustment device (50) comprises a servomotor (54).

## Revendications

1. Dispositif de retenue (1) pour retenir un utilisateur (20), à l'aide d'un harnais (40) équipant un mobile (10), comprenant au moins une installation de capteurs (30),
- le harnais (40) se composant d'une partie fixe de harnais (42) et d'une partie mobile de harnais (46),
- l'installation de capteurs (30) comprenant des moyens (34) pour détecter et surveiller la position corporelle (24) de l'utilisateur (20) en liaison avec la partie fixe de harnais (42),
- l'installation de capteurs (30) comporte des moyens (34) pour détecter et surveiller au moins une liaison partielle par la forme, entre l'utilisateur (20) et le harnais (40), et
- le dispositif (1) est réalisé pour émettre la libération de démarrage du mobile (10).

2. Dispositif (1) selon la revendication 1,
**caractérisé en ce que**
l'installation de capteurs (30) comporte des moyens (34) pour saisir le corps (22) et/ou des régions du corps (26) et/ou des positions du corps (24) de l'utilisateur (20).

3. Dispositif (1) selon la revendication 1 ou 2,
**caractérisé en ce que**
l'installation de capteurs (30) comporte des moyens (34) pour faire une mesure comparée des corps (22) et/ou des régions du corps (26) des utilisateurs (20) avec une position corporelle prédéfinie (24).

4. Dispositif (1) selon l'une des revendications précédentes,
**caractérisé en ce que**
l'installation de capteurs (30) comporte un scanner (36).

5. Dispositif (1) selon l'une des revendications précédentes,
**caractérisé en ce que**
l'installation de capteurs (30) comporte un capteur de température (34a) et/ou un capteur de mesure de surface (34b) et/ou un capteur de pression (34c) et/ou un capteur (34d) avec un milieu qui peut être comprimé ou refoulé et/ou un capteur capacitif (34e) et/ou un capteur à ultrasons (34f) et/ou un capteur infrarouge (34g).

6. Dispositif (1) selon l'une des revendications précédentes,
**caractérisé en ce que**
l'installation de capteurs (30) comporte des moyens (34) pour détecter et surveiller l'application proche de la partie mobile de harnais (46) contre le corps (22) de l'utilisateur (20).

7. Dispositif (1) selon l'une des revendications précédentes,
**caractérisé en ce qu'**
il est conçu pour émettre la libération de démarrage du mobile (10).

8. Dispositif (1) selon la revendication 7,
**caractérisé en ce que**
les moyens (34) de l'installation de capteurs (30) sont prévus dans la partie fixe de harnais (42) et/ou dans la partie mobile de harnais (44).

9. Dispositif (1) selon l'une des revendications précédentes,
**caractérisé en ce qu'**
il comporte plusieurs installations de capteurs (30),
ces installations de capteurs (30) sont prévues dans le harnais (40), dans la partie mobile (46) du harnais ou dans la partie mobile (46) et dans la coque formant siège (42) et/ou la coque formant dossier (44).

10. Dispositif (1) selon l'une des revendications précédentes,
**caractérisé en ce que**
l'installation de capteurs (30) est prévue en partie ou complètement à l'extérieur du harnais (40) du mobile (10).

11. Procédé de retenue d'un utilisateur (20) maintenu dans un harnais (40) d'un mobile (10), à l'aide d'un des dispositifs (1) selon l'une des revendications précédentes, comportant une installation de réglage (50),
procédé **caractérisé en ce que**
une unité de mesure (52) saisit la taille de l'utilisateur (20) avec au moins des installations de capteur (30), pour les transmettre à l'installation de réglage (50) et régler l'installation de réglage (50) avant le démarrage du mobile (10), pour régler le harnais (40) à la taille de l'utilisateur (20) et n'émettre la libération de démarrage qu'après un signal de retour positif des moyens (34) de l'installation de capteurs (34) si la liaison par la forme nécessaire est assurée entre le système de retenue et l'utilisateur.

12. Procédé selon la revendication 11,
**caractérisé en ce que**
la taille du passager (20) est saisie lors du passage du mobile (10) dans la zone de départ du mobile (10).

13. Procédé selon la revendication 11,
**caractérisé en ce que**
le départ du mobile (10) est libéré après le réglage du harnais (40) à la taille de l'utilisateur (20).

14. Dispositif (1) selon l'une des revendications 1 à 10,
comportant une installation de réglage (50),
dispositif **caractérisé en ce que**
l'installation de réglage (50) comporte un moteur de réglage (54).
